# EUROPÄISCHE PATENTSCHRIFT

(11) **EP 2 430 417 B1**
(45) Veröffentlichungstag und Bekanntmachung des Hinweises auf die Patenterteilung: **21.06.2017**
(21) Anmeldenummer: 10721978.4
(22) Anmeldetag: 11.05.2010
(51) Int. Cl.: G01K 17/08, G01N 25/48

(54) **VORRICHTUNG UND VERFAHREN ZUR ERFASSUNG DES SPEZIFISCHEN WÄRMEFLUSSES**
APPARATUS AND METHOD FOR DETECTING THE SPECIFIC HEAT FLOW
DISPOSITIF ET PROCÉDÉ DE DÉTECTION D'UN FLUX THERMIQUE SPÉCIFIQUE

(30) Priorität: 15.05.2009 DE 102009021600
(43) Veröffentlichungstag der Anmeldung: 21.03.2012
(73) Patentinhaber: CheMin GmbH, 86167 Augsburg (DE)
(72) Erfinder: SPIEGEL, Wolfgang, 86415 Mering (DE); KRÜGER, Jörg, 92421 Schwandorf (DE); MAGEL, Gabriele, 86157 Augsburg (DE)
(74) Vertreter: Flaccus, Rolf-Dieter
(86) Internationale Anmeldenummer: PCT/EP2010/002920
(87) Internationale Veröffentlichungsnummer: WO 2010/130427

(56) Entgegenhaltungen:
- WO-A1-02/073168
- US-A- 4 332 164
- US-A- 4 729 667

## Beschreibung

Die vorliegende Erfindung befasst sich mit einer Vorrichtung und einem Verfahren zur Erfassung des spezifischen Wärmeflusses einer Wärmequelle auf einen kühlmitteldurchflossenen Hohlkörper.

In Dampferzeugern wird die Energie aus den Verbrennungsgasen im hohen Temperaturbereich im Wesentlichen durch Flamm- sowie Gasstrahlung und im abgesenkten Temperaturbereich im Wesentlichen durch Konvektion auf das Wasser bzw. den Dampf übertragen. Die Gestaltung der Wärmeübertragungsflächen trägt den physikalischen Gesetzen Rechnung. In dem hohen Temperaturbereich sind Rauchgaszüge ohne Einbauten, die so genannten Leer- oder Strahlungszüge, üblich. In den unteren Rauchgastemperaturbereichen werden die Kesselzüge mit Rohren ausgestattet, die einen guten konvektiven Wärmeübergang aus dem Rauchgas auf das zu beheizende Medium sicherstellen. Die rauchgasbegrenzenden Wände der Kesselzüge werden in den meisten Fallen aus Membranwänden gebildet. Diese Membranwände bestehen aus mittels Stegen untereinander verschweißten Rohren. Sie bilden eine dichte Abdichtung für die Rauchgase und werden im Allgemeinen durch Kühlmittel, vorzugsweise Siedewasser, welches die Rohre durchfließt, gekühlt.

Für eine optimale Einstellung oder Regelung der Verbrennung und zur Ermittlung des Zustandes des Kessels, z.B. ob sich rauchgasseitige Ablagerungen gebildet haben oder eine vorhandene Feuerfestzustellung beschädigt ist, ist es nötig, während des Betriebes Informationen über das Innere des Kessels zu erlangen. Dies kann insbesondere dadurch erreicht werden, dass der spezifische Wärmefluss auf die Kesselwand effektiv ermittelt wird.

EP 1 760 441 B1 beschreibt eine Möglichkeit, den spezifischen Wärmefluss an Dampferzeugern zu ermitteln. Das Patent beruht auf folgendem Prinzip: Die Aufpunktung von Thermoelementen an der Kesselaußenseite, je eines Thermoelementes auf dem Rohrscheitel und dem benachbarten Steg, liefert ein Messsignal, wobei sich mittels der beiden Konstantandrähte der Thermoelemente der Unterschied der Temperaturen zwischen Rohr und Steg ermitteln lässt und damit ein Äquivalent zur gegebenen Wärmestromdichte an der Messposition bestimmt werden kann.

Die Nutzung der beiden Konstantandrähte und des Kessels als "Eisendraht" anstelle der beiden Thermoelemente erlaubt die Messung des Temperaturunterschiedes zwischen Rohr und Steg mit hoher Genauigkeit (1/100 Kelvin) bei gleichzeitig hoher Temperatur (meist ca. 250-300 °C). Ein anderer Beispiel ist im Dokument CH 670 311 A5 offenbart. Nachteil des bekannten Verfahrens ist, dass der Wärmeflussverlauf nur punktuell gemessen wird, anstatt den gesamten Wärmeflussverlauf über zumindest Teile des Kessels zu ermitteln. Damit ist es nicht möglich, den integralen Wärmefluss in einem (Siede)Rohr zu messen.

Der Temperaturverlauf in einem kühlmitteldurchflossenen Rohr ist selbst bei zeitlich konstanter Energieaufnahme und konstantem Kühlmitteldurchfluss in unterschiedlichen Höhen nicht zwangsläufig konstant oder proportional. So nimmt zwar die Temperatur im unteren Teil des Rohres mit steigender Höhe nahezu proportional zu, ist jedoch der Siedepunkt der Flüssigkeit bei dem an dieser Position vorherrschenden Druck erreicht, kommt es zu einer Verdampfung der Flüssigkeit und damit zu einem Temperaturabfall. Dieser Temperaturabfall ist über die abnehmende Dichte der überstehenden Wassersäule aus Wasser/Dampf bedingt.

Aufgabe der vorliegenden Erfindung ist eine Vorrichtung und ein Verfahren zur Erfassung des spezifischen Wärmeflusses zur Verfügung zu stellen, das die oben genannten Nachteile überwindet und eine optimierte Messung des Wärmeflusses über zumindest Teile des Kessels trotz Temperaturschwankungen oder -verläufen zu ermöglichen.

Diese Aufgabe wird durch ein Verfahren zur Erfassung des spezifischen Wärmeflusses nach Anspruch 1 gelöst.

Im Allgemeinen ist es mit diesem Verfahren möglich, den spezifischen Wärmefluss einer beliebigen Wärmequelle auf einen langgezogenen, kühlmitteldurchflossenen Hohlkörper zu bestimmen. Bevorzugt dient dieses Verfahren zur Ermittlung des spezifischen Wärmeflusses auf Membranwände, welche insbesondere Teil eines Heizkessels sind.

Die Hohlkörper sind bevorzugt als Rohre mit rundem oder mehreckigen Querschnitt ausgestaltet. Jedoch ist das Verfahren für in einer Richtung ausgedehnte Hohlkörper mit allen denkbaren Querschnittsformen geeignet. Im Folgenden wird der Einfachheit halber von Rohren gesprochen, was die oben genannten Ausführungsformen mit einschließt.
In einer bevorzugten Ausführungsform ist das Rohr zur Horizontalen in einem Winkel >1°, vorzugsweise >45°, besonders bevorzugt >80° geneigt. Im Allgemeinen sind die Rohre über zumindest Teilstrecken nahezu vertikal oder genau vertikal angeordnet. Bei den oben genannten Winkelangaben ist selbstverständlich, dass die höchstmögliche Neigung 90°, die Vertikale, beträgt.

Als Kühlmittel können alle bekannten Flüssigkeiten und Gase verwendet werden, bevorzugte Kühlmittel sind Siedewasser und Öle. Der Umlauf des Kühlmittels kann sowohl ein natürlicher Umlauf sein (Naturumlauf) oder durch eine Pumpe erzwungen werden (Zwangsumlauf). Die bevorzugte Strömungsrichtung des Kühlmittels in den Rohren ist aufsteigend nach oben.

Die Rohrtemperatur schwankt unter anderem mit dem Trommeldruck und damit mit der erzeugten Dampfmenge und der Stabilität der Druckregelung der nachgeschalteten Turbine. Der Grund dafür ist, dass an der Turbine der Druck (z.B. 40 bar) konstant gehalten wird. Zuvor durchströmt der Dampf den Überhitzer im Kessel. Für den Dampf ist dies eine Schikane, die umso mehr Widerstand bietet, je größer die Menge an durchströmendem Dampf ist. Entsprechend höher muss der Druck in der Trommel sein. In der Trommel haben Dampf und Wasser den gleichen Druck. Damit ändert sich auch der Trommeldruck im Kessel in Abhängigkeit der Dampfmenge und der Stabilität des Dampfdrucks vor der Turbine. Mit dem Trommeldruck ändert sich auch die Siedetemperatur des Wassers. Die Konsequenz daraus ist, dass je höher die Dampfmenge ist, welche zur Turbine strömt, desto höher der Druckverlust in den Überhitzerrohren und desto höher muss der Druck und damit die Temperatur des Siedewassers und damit die Rohrtemperatur der kühlmitteldurchströmten Siederohre sein. In der Praxis schwankt die Dampfmenge immer und damit auch die Rohrtemperaturen um mehrere Grad Kelvin.

An jedem Rohr, an dem der Wärmefluss ermittelt wird, sind an mindestens zwei Messpunkten A und B Temperaturmessgeräte angeordnet, wobei A relativ zur Kühlmittelflussrichtung betrachtet hinter B liegt. Zum Beispiel würde dies für vertikale Steigrohre bedeuten, dass diese Anordnung einer Positionierung von A über B entspricht.
Der Wärmefluss wird nun mittels der Differenz der Messwerte ermittelt, was zusätzlich die oben genannten durch Druckunterschiede hervorgerufenen Temperaturschwankungen kompensiert.

Bevorzugt befindet sich an mindestens der Hälfte der Rohre, und besonders bevorzugt an allen Rohren ein solcher Messaufbau.

In einer bevorzugten Ausführungsform misst mindestens ein zusätzliches Temperaturmessgerät eine Basistemperatur an einem Punkt Z, der relativ zum Kühlmittelfluss vor den Punkten A und B liegt. Vorzugsweise befindet sich dieser Punkt unterhalb von B am selben Rohr oder an einem unteren Sammelbehälter für das Kühlmittel.
Im Falle von mehreren Messungen ist es möglich, dass sich jede Messung auf eine eigene, an jedem betreffenden Rohr gemessene Basistemperatur bezieht, oder sich bevorzugt alle Messungen auf eine einzige Basistemperatur beziehen, wobei in diesem Fall der Messpunkt Z bevorzugt am unteren Sammelbehälter liegt.

Als Temperaturmessgeräte können alle bekannten Temperaturmessgeräte verwendet werden, welche in der Lage sind Temperaturen in dem entsprechenden Bereich (zwischen 0° C und 1000°C) zu messen. Bevorzugte Messgeräte sind die oben im Zusammenhang mit EP 1 760 441 genannten Thermoelemente, welche aus Konstantandrähten bestehen, die direkt auf das Rohr aufgeschweißt sind. Das Rohr besteht dabei vorzugsweise zum großen Teil aus Eisen. Mittels solcher Messgeräte ist eine Temperaturdifferenz zwischen zwei Messpunkten durch eine gemessene Spannungsdifferenz sehr genau bestimmbar. Weitere bevorzugte Messgeräte sind Peltier-Elemente.

Die Berechnung des Temperaturverlaufs in dem Rohr kann noch optimiert werden, wenn die folgenden Einflüsse in dieser Berechnung berücksichtigt werden. Dies sind zum einen die Höhenposition eines Messpunktes in Bezug auf die Trommel und zum anderen die Siedewassergeschwindigkeit im Siederohr.

Die Kompensation der Höhenposition der Messpunkte geschieht dadurch, dass die Höhe der einzelnen Messpunkte ermittelt wird. Über diese Höhe der Messpunkte bis zum Trommeleintritt des Siedewassers, den hydraulischen Druckverlust und der zugehörigen Siedetemperatur kann die integrale Dichteverteilung des Siedewassers bis zur jeweiligen Messstelle bestimmt werden. Sie wird im Falle des Siedens des Kühlwassers über die Zunahme (Aufheizphase vor Siedebeginn) und Abnahme (nach Siedebeginn) der Temperatur die Zunahme der spezifischen Energie des Wassers ermittelt.

Der höhenmäßige Verlauf der Temperaturen auf dem Siederohr gestattet die Bestimmung der Thermik des Siedewasserrohres und damit letztendlich die Geschwindigkeit des Wassers im Eintritt zum Rohr. Die Siedewassergeschwindigkeit kann an Hand üblicher hydraulischer Druckverlustmessungen, der treibenden Dichte- und Höhendifferenz bestimmt und damit kompensiert werden und in die Berechnung des Wärmeflusses einfließen.

In einer bevorzugten Ausführungsform wird die Temperatur an mindestens drei unterschiedlichen Positionen A, B und C gemessen, wobei relativ zur Kühlmittelflussrichtung betrachtet A auf B und B auf C folgt. Aus den gemessenen Temperaturen wird dabei jeweils die Temperaturdifferenz zwischen A und B [dT(AB)] und zwischen B und C [dT(BC)] ermittelt. Bei weiteren Messpunkten wird analog verfahren. Auf diese Weise ist es möglich, lokale Temperaturunterschiede zu erkennen und diese in die Berechnung des Wärmeflusses einfließen zu lassen. Dadurch wird eine Verbesserung der Berechnung des Wärmeflusses erreicht.
Bei einem besonders vorteilhaften Verfahren werden auf die vorstehend beschriebene Weise jeweils Temperaturdifferenzen zwischen fünf Messpositionen ermittelt und aus den so berechneten Werten wiederum nach dem Vorstehend beschriebenen Verfahren ein zweites Mal Differenzen benachbarter Werte berechnet, also die zweite Ableitung aus dem ursprünglich gemessenen Temperaturverlauf gebildet. Auf diese Weise ist eine noch genauere Detektion lokal begrenzter Wärmeeinflüsse möglich. Diese zweite Ableitung wird im Folgenden auch, da es sich um diskrete Messwerte handelt, als "doppelte Differenz" bezeichnet.

Der Wärmefluss wird in guter Näherung durch den Anteil an Dampf im Kühlmedium wiedergegeben. Für den Fall, dass das Siedewasser in den Rohren zu sieden beginnt, sinkt die Temperatur in Kühlmittelflussrichtung ab einer bestimmten Position, der Siedeposition, ab. Um in diesem Fall die Ermittlung des Wärmeflusses zu optimieren, bedient man sich bevorzugt eines Verfahrens und einer Vorrichtung, bei der an mindestens vier Messpunkten A, B, C und D die Temperatur des Rohres gemessen wird, wobei einer der Messpunkte bevorzugt mit Z gleichgesetzt wird, also die Basistemperatur misst.
Dabei ist die Position der Messpunkte relativ zur Kühlmittelflussrichtung betrachtet A hinter B hinter C hinter D. Im Falle eines vertikalen Steigrohres lägen die Messpunkte also von unten nach oben betrachtet in der Reihenfolge D, C, B und A.

Liegt die Siedeposition der Kühlflüssigkeit zwischen den Positionen B und C, kann diese Position berechnet werden, wie im Folgenden ausgeführt wird.
Graphisch kann diese Position ermittelt werden, indem die Temperaturen der Messgeräte in einem Koordinatensystem auf der Ordinate und die Positionen der Messgeräte auf der Abszisse aufgetragen werden. Sollte der Messpunkt D am Sammelbehälter liegen, wird diesem Messpunkt die Höhe=0 zugeordnet. Die Siedeposition ergibt sich aus dem Schnittpunkt der Geraden durch die Messpunkte C - D mit der Geraden durch die Messpunkte A - B.

Rechnerisch lässt sich die Siedeposition aus den Formeln zum Schnittpunkt zweier Geraden aus den Temperatur- und Höhendifferenzen und den absoluten Temperaturen und Höhen der Messgeräte berechnen.

Mit der Ermittlung der Siedeposition und der Temperaturverläufe davor und danach kann der Temperaturverlauf über das gesamte Rohr extrapoliert werden. Annähernd entspricht der Temperaturverlauf der beiden oben ermittelten Geraden, nämlich der Geraden durch C-D im unteren Bereich des Rohres bis zur Siedeposition und der Gerade durch A-B im oberen Bereich des Rohres ab der Siedeposition.

In einer bevorzugten Ausführungsform werden Temperaturen des Rohres an weiteren Messstellen gemessen. so dass nicht nur zwischen den Punkten B und C der Siedepunkt ermittelt werden kann, sondern zwischen weiteren Punkten. Da zur Ermittlung der Siedeposition zwei Geraden konstruiert werden müssen, und da sich jede Gerade durch zwei Punkte genau definieren lässt, genügt es, wenn zu jeder Seite der Siedeposition mindestens zwei Temperaturen an unterschiedlichen Positionen ermittelt werden können. Die Messungen werden jedoch genauer, wenn weitere Messpunkte, vorzugsweise mindestens einer, besonders bevorzugt mindestens drei auf mindestens einer Seite der Siedeposition hinzukommen.

Bei einer Verschlechterung des Kühlmittelflusses oder bei einer Verschlechterung der Wärmekopplung zwischen Rohr und Kühlmittel, z.B hervorgerufen durch die übermäßige Bildung von Gas- bzw. Dampfblasen im Kühlmittel, besteht die Gefahr der lokalen Überhitzung des Rohres. Dies wird auch als Siedekrise bezeichnet. Eine lokale Überhitzung der Rohre kann in der Zerstörung der Rohrwand in diesem Bereich resultieren, was den weiteren Betrieb ohne aufwendige Reparatur unmöglich macht. Es ist daher von entschiedener Bedeutung, derartige Störquellen schnell zu lokalisieren, um entsprechende Gegenmaßnahmen ergreifen zu können.

Durch Vergleich der gemessenen Temperaturen mit Vergleichstemperaturen aus einer Datenbank kann bestimmt werden, ob es an einem Punkt eines Rohres zu einer Siedekrise kommen könnte oder bereits gekommen ist. Daher enthält eine bevorzugte weitere Ausführungsform eine Datenbank, in der Vergleichstemperaturen oder Vergleichstemperaturdifferenzen gespeichert sind, und mit deren Einträgen die jeweils gemessenen aktuellen Temperaturen verglichen werden. Weicht eine der gemessenen Temperaturen um einem vorher festgelegten Toleranzwert von den Vergleichswerten ab, ist eine Siedekrise wahrscheinlich und es kann ein Alarm ausgegeben werden oder automatische Gegenaktionen in die Wege geleitet werden. Zum Vergleichen dieser Vergleichswerte mit den aktuellen Temperaturen werden bevorzugt die Vergleichswerte auf eine Vergleichsbasistemperatur geeicht und die aktuellen Temperaturen auf eine aktuelle Basistemperatur geeicht.

Beispiele für erfindungsgemäße Vorrichtungen sind in den Abbildungen dargestellt.
Figur 1 zeigt schematisch ein Rohr einer Membranwand eines Brennkessels mit 2 Messtellen A und B.
Figur 2 zeigt eine Auftragung der mit einer Vorrichtung nach Figur 1 gemessenen Temperaturen gegen die Messposition.
Figur 3 zeigt schematisch ein Rohr einer Membranwand eines Brennkessels mit 4 Messtellen A bis D.
Figur 4 zeigt eine Auftragung der mit einer Vorrichtung nach Figur 3 gemessenen Temperaturen gegen die Messposition.
Figur 5 zeigt einen realen Temperaturverlauf in Abhängigkeit von der Messhöhe.
Figur 6 zeigt den Temperaturverlauf von Figur 5 korrigiert um die Einflüsse der Temperaturschwankungen, der Höhenposition der Messpunkte und der Siedewassergeschwindigkeit.

Das folgende Beispiel verdeutlicht die Bestimmung des spezifischen Wärmeflusses der Wärme eines Brennkessels auf eine den Brennkessel umschließende Membranwand, deren Rohre mit dem Kühlmittel Siedewasser durchflossen sind.

Aus dem Sammler des Kühlmittelkreislaufs strömt Wasser in die Rohre. Die Temperatur entspricht der Siedetemperatur des Wassers in der Trommel. Der Druck entspricht dem Siededruck in der Trommel plus der Wassersäule des Fallrohres. Beispielsweise beträgt bei einer Siedewassertemperatur von 248°C und einer Fallrohrhöhe von 40 Meter der zusätzliche Druck ca. 3 bar. Somit muss sich das im Rohr aufsteigende Wasser zunächst weiter erwärmen, um zum Sieden zu kommen, d.h. die ersten Meter Verdampferwand wird die aufgenommene Energie zur Erwärmung eines "Ein-Phasen-Systems" (Wasser) benutzt. Mit zunehmender Höhe sinkt auch etwas der Druck, da die Wassersäule zur Trommel kürzer wird, d.h. Erwärmung und Druckabsenkung laufen aufeinander zu, bis zum Erreichen der Siedebedingung. Ab dieser Höhe wird die weitere Energieaufnahme in eine Verschiebung der Proportionen in einem "Zwei-Phasen-System" (Wasser-Dampf) zugunsten des Dampfanteils umgesetzt. Es gibt also eine Höhe des Siedebeginns in der Verdampferwand bezogen auf das betrachtete Rohr, welche die vorgenannte Siedeposition ist. Zwischen Wassereintritt aus dem Sammler (Startposition) und dem Ort des Siedebeginns wird das Rohr wärmer, da sich das Wasser erwärmt.
Ab der Position "Siedebeginn" bis zur Trommel wird das Rohr kälter, da sich mit zunehmendem Dampfanteil die Dichte des Mediums verringert und damit der Auflastdruck der Wassersäule im Rohr zwischen Messort und Trommel kleiner wird und somit die Siedetemperatur sinkt. Je kälter das Rohr wird, bezogen auf die Wegstrecke zwischen Siedebeginn und Messort, umso größer ist der Wärmefluss auf der betrachteten Strecke.

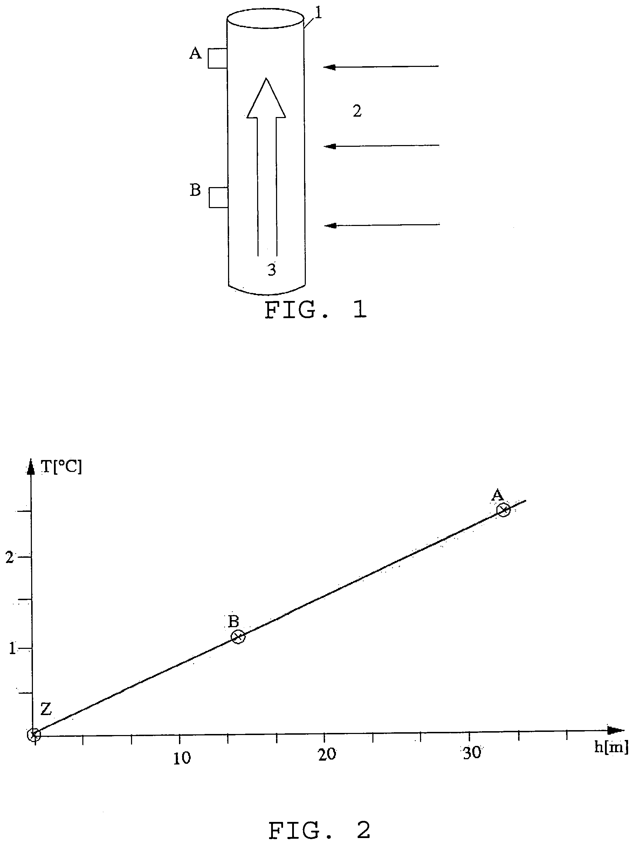

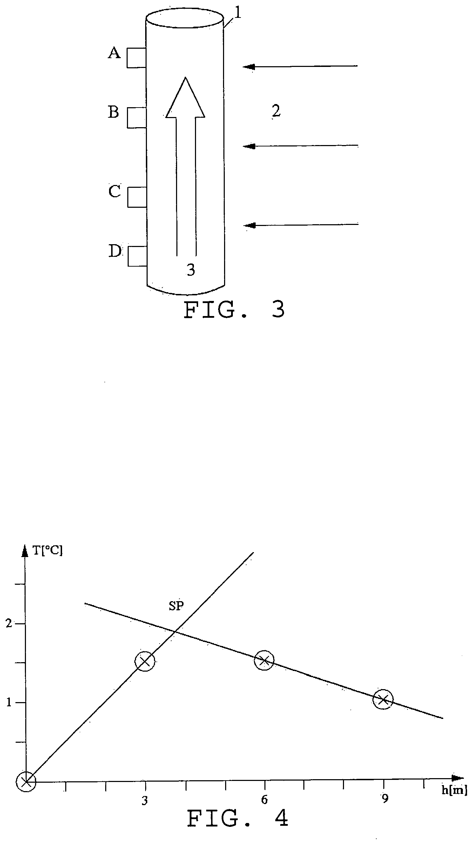

In Figur 1 ist ein Rohr (1) dieser Membranwandwand dargestellt, das mit Kühlwasser (2) durchflossen ist, welches erwärmt wird (3). In absteigender Reihenfolge sind am den Rohr die Messpunkte A und B angebracht, an denen die Temperatur des Rohres gemessen wird. Die Differenz der gemessenen Temperaturen bezogen auf eine an einem Punkt Z gemessenen Basistemperatur ist als Graph in Figur 2 dargestellt. Aus diesem Graphen, bzw. der Geradensteigung, welche die Differenz der Messwerte ist, lässt sich der Wärmefluss ermitteln.
Betrachtet man ein Rohr (1) dieser Membranwandwand, das mit Kühlwasser (2) durchflossen ist, welches erwärmt wird (3), an dem wie in Figur 3 gezeigt in absteigender Reihenfolge an den Messpunkten A, B, C und D mit Thermoelementen die Temperatur gemessen wird, so erhält man in dem Falle, in dem die Siedeposition zwischen den Punkten B und C liegt, an den Messstellen einen bestimmten Temperaturverlauf. Dieser Temperaturverlauf zeichnet sich dadurch aus, dass zumindest an den Positionen C und D mit zunehmender Höhe ansteigende Temperaturen gemessen werden und an Messtelle A eine Temperatur, die niedriger liegt als die bei B gemessene. Die Temperatur bei B kann je nach Siedeposition höher, niedriger oder gleich der Temperatur bei C sein.

Die folgende Tabelle gibt beispielhafte Messwerte der Messung wieder, wobei zur besseren Übersicht die Messwerte Differenzen zu der bei D gemessenen Temperatur darstellen:

| | Rohrposition (Höhe) in m | Temperatur in °C |
|---|---|---|
| A | 9 | 1 |
| B | 6 | 1,5 |
| C | 3 | 1,5 |
| D | 0 | 0 |

Die "Strecke" des erfassten Wärmeflusses wird nun dadurch festgelegt, dass zwei Geraden durch die Punkte gelegt werden.
In Figur 4 sind die Messwerte der Tabelle in ein Schaubild aufgetragen, dass die Temperatur (Abszisse) in Abhängigkeit zur Messposition (Ordinate) zeigt.
Werden nun zwei Geraden durch die Punkte A-B und C-D gelegt, liegt die Siedeposition genau in dem Schnittpunkt der Geraden, also in einer Höhe von ca 3,8 m.

In dem Falle, dass die Siedeposition unterhalb von C oder oberhalb von B liegt, findet kein Temperaturabfall zwischen B und C statt und dieser Fall wäre klar dadurch erkennbar, dass B und C auf der selben Geraden liegen würden, also der Schnittpunkt der Geraden C bzw. B wäre.

Da in diesem Fall eine Siedeposition nicht mehr zu ermitteln wäre, ist es entweder möglich, die Positionen B und C in einem solch großen Abstand anzuordnen, dass bei einem normalen Betrieb die Siedeposition immer zwischen B und C liegt, oder weitere Messpositionen an dem Rohr anzuordnen. Da es nur eine Siedeposition gibt, wird in diesem Falle ein Teil der Messpunkte auf der einen Geraden liegen und der andere auf der anderen. In dem bevorzugten Falle, dass 5 oder mehr Temperaturen an dem Rohr gemessen werden, können die Geraden auch dann klar bestimmt werden, wenn die Siedeposition genau an der mittleren Messposition liegt.

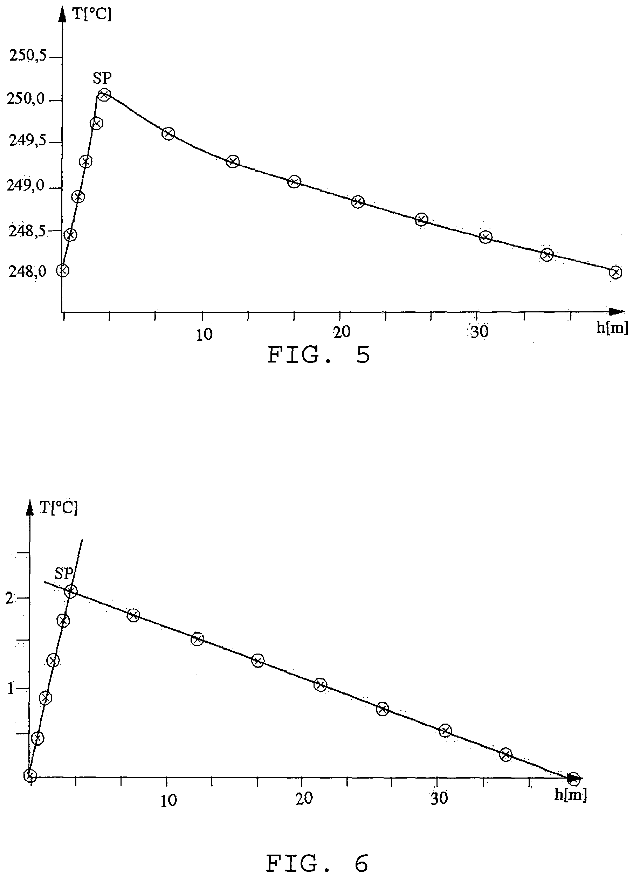

Figur 5 zeigt einen realen Temperaturverlauf an einer Membranwand, gemessen an 14 Messpositionen. Insbesondere im abfallenden Teil der Temperaturen können, wie aus dieser Figur ersichtlich wird, Fehler reduziert werden, wenn die Einflüsse der Temperaturschwankungen, der Höhenposition der Messpunkte und der Siedewassergeschwindigkeit aus den gemessenen Temperaturen herausgerechnet werden.

Figur 6 zeigt einen Temperaturverlauf ohne die Einflüsse der Temperaturschwankungen, der Höhenposition der Messpunkte und der Siedewassergeschwindigkeit. Hier ist der nahezu lineare Verlauf vor und nach der Siedeposition deutlich zu erkennen.

Die aus dem oben beschriebenen Verfahren ableitbaren Befunde zum Wärmefluss lassen sich insbesondere für die Regelung der Feuerung eines Dampfkessels einsetzen.

## Patentansprüche

1. Verfahren zur Erfassung des spezifischen Wärmeflusses einer Wärmequelle auf ein langgezogenes kühlmitteldurchflossenes Rohr (1) in einem Dampferzeuger, welches zur Horizontalen in einem Winkel >1° ausgerichtet ist, **dadurch gekennzeichnet, dass** an diesem Rohr (1) die Temperatur an mindestens zwei Messpunkten A und B gemessen wird, wobei A relativ zur Kühlmittelflussrichtung betrachtet hinter B liegt, was für vertikale Steigrohre bedeuten würde, dass diese Anordnung einer Positionierung von A über B entspricht, und wobei die Temperaturdifferenz zwischen A und B ermittelt wird, und dass zusätzlich eine Basistemperatur an einem Punkt Z gemessen wird, wobei sich dieser Punkt Z relativ zum Kühlmittelfluss vor den Punkten A und B unterhalb von B am selben Rohr (1) oder an einem unteren Sammelbehälter für das Kühlmittel (2) befindet und jede der gemessenen Temperaturen auf diese Basistemperatur bezogen wird, indem die Differenz der gemessenen Temperaturen bezogen auf eine an dem Punkt Z gemessene Basistemperatur bestimmt wird.

2. Verfahren nach Anspruch 1, **dadurch gekennzeichnet, dass** das Rohr (1) zur Horizontalen in einem Winkel > 45° ausgerichtet ist.

3. Verfahren einem der vorangehenden Ansprüche, **dadurch gekennzeichnet, dass** als Kühlmittel (2) Siedewasser verwendet wird.

4. Verfahren nach Anspruch 3, **dadurch gekennzeichnet, dass** die integrale Dichteverteilung des Siedewassers bis zur jeweiligen Messstelle bestimmt wird und die Messwerte damit korrigiert werden.

5. Verfahren nach Anspruch 3, **dadurch gekennzeichnet, dass** die Siedewassergeschwindigkeit an Hand hydraulischer Druckverlustmessungen, der treibenden Dichte- und Höhendifferenz bestimmt wird und in die Korrektur der Messwerte einfließt.

6. Verfahren nach einem der vorangehenden Ansprüche, **dadurch gekennzeichnet, dass** das Rohr (1) ein Siederohr ist, in dem eine Geschwindigkeitserfassung installiert wird.

7. Verfahren nach einem der vorangehenden Ansprüche, **dadurch gekennzeichnet, dass** an diesem Rohr (1) die Temperatur an mindestens drei Messpunkten A, B und C gemessen wird, wobei relativ zur Kühlmittelflussrichtung betrachtet A auf B auf C folgt und die Temperaturdifferenzen zwischen A und B und B und C ermittelt werden.

8. Verfahren nach einem der vorangehenden Ansprüche, **dadurch gekennzeichnet, dass** an diesem Rohr (1) die Temperatur an mindestens vier Messpunkten A, B, C und D gemessen wird, wobei relativ zur Kühlmittelflussrichtung betrachtet A auf B auf C auf D folgt und die Temperaturdifferenzen zwischen A und B und C und D ermittelt werden.

9. Verfahren nach Anspruch 8, **dadurch gekennzeichnet, dass** eine Siedeposition aus dem Schnittpunkt zweier Geraden ermittelt wird, welche durch die Messpunkte A-B und C-D verlaufen.

10. Verfahren nach einem der vorangehenden Ansprüche, **dadurch gekennzeichnet, dass** die Temperatur an mindestens 5 unterschiedlichen Messpunkten gemessen wird und die doppelte Differenz der Messwerte berechnet wird.

11. Verfahren nach einem der vorangehenden Ansprüche, **dadurch gekennzeichnet, dass** die gemessene Temperatur mit Vergleichswerten einer Datenbank verglichen werden und bei Überschreitung eines Toleranzschwelle ein Alarm ausgegeben wird oder automatisch Aktionen gestartet werden.

12. Vorrichtung zur Erfassung des spezifischen Wärmeflusses einer Wärmequelle auf ein langgezogenes kühlmitteldurchflossenes Rohr (1) in einem Dampferzeuger, welches zur Horizontalen in einem Winkel >1° ausgerichtet ist, **dadurch gekennzeichnet, dass** an diesem Rohr (1) an mindestens zwei Messpunkten A und B Temperaturmessgeräte angeordnet sind, wobei A relativ zur Kühlmittelflussrichtung betrachtet hinter B liegt, was für vertikale Steigrohre bedeuten würde, dass diese Anordnung einer Positionierung von A über B entspricht, und wobei die Temperaturdifferenz zwischen A und B ermittelt wird, und dass zusätzlich eine Basistemperatur an einem Punkt Z gemessen wird, wobei sich dieser Punkt Z relativ zum Kühlmittelfluss vor den Punkten A und B unterhalb von B am selben Rohr (1) oder an einem unteren Sammelbehälter für das Kühlmittel (2) befindet und jede der gemessenen Temperaturen auf diese Basistemperatur bezogen wird, indem die Differenz der gemessenen Temperaturen bezogen auf eine an dem Punkt Z gemessene Basistemperatur bestimmt wird.

13. Vorrichtung nach Anspruch 11, **dadurch gekennzeichnet, dass** das Rohr (1) zur Horizontalen in einem Winkel > 45° ausgerichtet ist.

## Claims

1. A method for detecting the specific heat flow of a heat source to an elongated coolant-carrying pipe (1) in a steam generator, said pipe being aligned at an angle >1° from the horizontal, **characterized in that** the temperature is measured on said pipe (1) at at least two measurement points A and B, wherein A, viewed relative to the coolant flow direction, is located behind B, which in the case of vertical rising pipes means that the arrangement corresponds to a positioning of A above B, and wherein the temperature difference is determined between A and B, and that, in addition, a base temperature is measured at a point Z, wherein, relative to the coolant flow, said point Z is located in front of points A and B, below B, on the same pipe (1) or on a lower collecting tank for the coolant (2) and each of the measured temperatures is put into relation to said base temperature by determining the difference of the measured temperatures relative to a base temperature measured at point Z.

2. The method according to claim 1, **characterized in that** the pipe (1) is aligned at an angle >45° from the horizontal.

3. The method according to any one of the preceding claims, **characterized in that** boiling water is used as the coolant (2).

4. The method according to claim 3, **characterized in that** the integral density distribution of the boiling water is determined up to the respective measuring point and the measurement values are corrected with it.

5. The method according to claim 3, **characterized in that** the velocity of the boiling water is determined by hydraulic pressure loss measurements, the driving density and height difference, and is used in the correction of the measured values.

6. The method according to any one of the preceding claims, **characterized in that** the pipe (1) is a boiling tube in which a means for velocity detection is installed.

7. The method according to any one of the preceding claims, **characterized in that** on said pipe (1) the temperature is measured at at least three measuring points A, B and C, wherein, viewed relative to the coolant flow direction, A follows B follows C, and the temperature differences are determined between A and B, and B and C.

8. The method according to any one of the preceding claims, **characterized in that** on said pipe (1) the temperature is measured at at least four measuring points A, B, C and D, wherein, viewed relative to the coolant flow direction, A follows B follows C follows D, and the temperature differences are determined between A and B, and C and D.

9. The method according to claim 8, **characterized in that** the boiling position is determined from the intersection of two straight lines which run through the measurement points A-B and C-D.

10. The method according to any one of the preceding claims, **characterized in that** the temperature is measured at at least 5 different measuring points and the second difference of the measured values is calculated.

11. The method according to any one of the preceding claims, **characterized in that** the measured temperature is compared with reference values of a database and on exceeding a tolerance threshold an alarm is issued or automatic actions are started.

12. A device for detecting the specific heat flow of a heat source to an elongated coolant-carrying pipe (1) in a steam generator, said pipe being aligned at an angle >1° from the horizontal, **characterized in that** temperature-measuring instruments are arranged on said pipe (1) at at least two measurement points A and B, wherein A, viewed relative to the coolant flow direction, is located behind B, which in the case of vertical rising pipes means that the arrangement corresponds to a positioning of A above B, and wherein the temperature difference is determined between A and B, and that, in addition, a base temperature is measured at a point Z, wherein, relative to the coolant flow, said point Z is located in front of points A and B, below B, on the same pipe (1) or on a lower collecting tank for the coolant (2) and each of the measured temperatures is put into relation to said base temperature by determining the difference of the measured temperatures relative to a base temperature measured at point Z.

13. The device according to claim 11, **characterized in that** the pipe (1) is aligned at an angle >45° from the horizontal.

## Revendications

1. Procédé de détection du flux thermique spécifique d'une source de chaleur sur un tube allongé (1) parcouru par un réfrigérant dans un générateur de vapeur et orienté avec un angle > 1° par rapport à l'horizontale, **caractérisé en ce que** la température au niveau dudit tube (1) est mesurée au niveau d'au moins deux points de mesure A et B, dans lequel A se trouve derrière B par rapport au sens d'écoulement de réfrigérant, ce qui signifierait, pour des colonnes montantes verticales, que ledit agencement correspond à un positionnement de A au-dessus de B, et dans lequel la différence de température entre A et B est déterminée, et une température de base est en outre mesurée au niveau d'un point Z, dans lequel ledit point Z se trouve avant les points A et B par rapport à l'écoulement de réfrigérant, en dessous de B sur le même tube (1) ou au niveau d'un récipient de collecte inférieur destiné au réfrigérant (2) et chacune des températures mesurées est rapportée à ladite température de base en déterminant la différence des températures mesurées par rapport à une température de base mesurée au niveau du point Z.

2. Procédé selon la revendication 1, **caractérisé en ce que** le tube (1) est orienté avec un angle > 45° par rapport à l'horizontale.

3. Procédé selon l'une quelconque des revendications précédentes, **caractérisé en ce que** de l'eau bouillante est utilisée comme réfrigérant (2).

4. Procédé selon la revendication 3, **caractérisé en ce que** la distribution de densité intégrale de l'eau bouillante est déterminée pour les points de mesure respectifs et les valeurs de mesure sont ainsi corrigées.

5. Procédé selon la revendication 3, **caractérisé en ce que** la vitesse de l'eau bouillante est déterminée à l'aide de mesures de perte de pression hydraulique et de la différence de densité et de hauteur en entraînement et influe sur la correction des valeurs de mesure.

6. Procédé selon l'une quelconque des revendications précédentes, **caractérisé en ce que** le tube (1) est un tube vaporisateur dans lequel est installé un dispositif de détection de vitesse.

7. Procédé selon l'une quelconque des revendications précédentes, **caractérisé en ce que** la température est mesurée au niveau dudit tube (1) au niveau d'au moins trois points de mesure A, B et C, dans lequel A suit B qui suit C par rapport au sens d'écoulement de réfrigérant et les différences de température sont déterminées entre A et B et B et C.

8. Procédé selon l'une quelconque des revendications précédentes, **caractérisé en ce que** la température est mesurée au niveau dudit tube (1) au niveau d'au moins quatre points de mesure A, B, C et D, dans lequel A suit B qui suit C qui suit D par rapport au sens d'écoulement de réfrigérant et les différences de température sont déterminées entre A et B et C et D.

9. Procédé selon la revendication 8, **caractérisé en ce qu'**une position d'ébullition est déterminée à partir du point d'intersection de deux droites passant par les points de mesure A-B et C-D.

10. Procédé selon l'une quelconque des revendications précédentes, **caractérisé en ce que** la température est mesurée au niveau d'au moins 5 points de mesure différents et le double de la différence des valeurs de mesure est calculé.

11. Procédé selon l'une quelconque des revendications précédentes, **caractérisé en ce que** la température mesurée est comparée à des valeurs de comparaison d'une base de données et, en cas de dépassement d'un seuil de tolérance, une alarme est émise ou des actions sont lancées de manière automatique.

12. Dispositif d'enregistrement du flux thermique spécifique d'une source de chaleur sur un tube allongé (1) parcouru par un réfrigérant dans un générateur de vapeur et orienté avec un angle > 1 ° par rapport à l'horizontale, **caractérisé en ce que** des appareils de mesure de température sont agencés sur ledit tube (1) au niveau d'au moins deux points de mesure A et B, dans lequel A se trouve derrière B par rapport au sens d'écoulement de réfrigérant, ce qui signifierait, pour des colonnes montantes verticales, que ledit agencement correspond à un positionnement de A au-dessus de B, et dans lequel la différence de température entre A et B est déterminée, et une température de base est en outre mesurée au niveau d'un point Z, dans lequel ledit point Z se trouve avant les points A et B par rapport à l'écoulement de réfrigérant, en dessous de B sur le même tube (1) ou au niveau d'un récipient de collecte inférieur destiné au réfrigérant (2) et chacune des températures mesurées est rapportée à ladite température de base en déterminant la différence des températures mesurées par rapport à une température de base mesurée au niveau du point Z.

13. Dispositif selon la revendication 11, **caractérisé en ce que** le tube (1) est orienté avec un angle > 45° par rapport à l'horizontale.
